# EUROPEAN PATENT APPLICATION

(11) **EP 2 003 886 A1**
(43) Date of publication of application: **17.12.2008**
(21) Application number: 08010826.9
(22) Date of filing: 13.06.2008
(51) Int. Cl.: H04N 5/445, G11B 27/00

(54) **Content reproducing device**

(30) Priority: 13.06.2007 JP 2007156100
(71) Applicant: Funai Electric Co., Ltd., Daito-shi, Osaka 574-0031 (JP)
(72) Inventor: Nakada, Takeshi, Osaka 574-0013 (JP); Senoo, Junya, Osaka 574-0013 (JP); Okazaki, Masaki, Osaka 574-0013 (JP); Yoshida, Hiroshi, Osaka 574-0013 (JP)
(74) Representative: Grünecker, Kinkeldey, Stockmair & Schwanhäusser Anwaltssozietät

(57) **Abstract**

A content reproducing device comprises a display unit and a speaker for reproducing a content together with a remote control to command the operation of the content reproducing device. The remote control has a video button operated to display a content list of reproducible video contents. When the video button of the remote control is pressed, the content reproducing device displays a content list of reproducible video contents on the display unit. When a content selection operation is performed by a user using the remote control to select an arbitrary content from the content list, the content reproducing device reproduces the selected content by the display unit and the speaker. The content reproducing device can find and reproduce a target content with fewer operations, so that it is easier to use it.

## Description

### BACKGROUND OF THE INVENTION

### 1. Field of the Invention

The present invention relates to a content reproducing device for reproducing contents such as images and music.

### 2. Description of the Related Art

A conventional content reproducing device for reproducing contents such as images and music has a display unit to display a content list showing reproducible contents. When the content reproducing device is operated to select an arbitrary content from the content list, the selected content is reproduced as follows. First, when a content button of a remote control is pressed, the content reproducing device displays a content type selection screen for selecting a content type (such as photo content, music content and video content). Next, when the remote control is operated to select a content type from the content type selection screen, the content reproducing device displays a content list showing reproducible contents of the selected content type. When the remote control is then operated to select a content from the content list, the content reproducing device reproduces the selected content.

Another conventional content reproducing device is connected for communication with multiple content supply units for supplying contents, and is supplied with contents from the content supply units for reproducing the supplied contents. Such content reproducing device is operated as follows. When a content button of a remote control is pressed, the content reproducing device displays a unit selection screen for selecting a content supply unit (from which contents are supplied to the contend reproducing device) before displaying a content type selection screen for selecting a content type as described above. When the remote control is then operated to select a content supply unit from the unit selection screen, the content reproducing device displays a content type selection screen for selecting a content type as described above.

In each of the conventional content reproducing devices, in order to display a content list of a content type (such as photo content, music content and video content), it is first required to display a content type selection screen for selecting a content type, and then perform a content type selection operation to select the content type. That is, in order to display a content list of a content type, each of the conventional content reproducing devices requires at least two operations: an operation to display a content type selection screen (only the pressing operation of a content button, or both the pressing operation of the content button and the unit selection operation to select a content supply unit from a unit selection screen); and an operation to select a content type. Furthermore, in order to reproduce a content, an operation to select a content from the content list is also required. In other words, the conventional content reproducing devices require at least two operations to display a content list of a content type, and at least three operations to reproduce a content. Thus, the conventional content reproducing devices require many operations to find a target content for reproduction (namely to display a content list of the same content type as that of the target content), and also many operations to reproduce a target content, so that it is not easy to use them.

There are other known systems and devices in this field. For example, Japanese Laid-open Patent Publication 2006-227843 discloses a content information management system using a remote control server to store meta-information of contents and serve an initial information providing function to find a content, so as to make it possible to provide meta-information of contents regardless of the state of a content supply unit storing the contents. Furthermore, Japanese Laid-open Patent Publication 2001-128093 discloses a video reproduction device using a remote control with buttons corresponding to types of videos (such as news and movies), in which when a button is pressed, a video corresponding to the button (video of news if the button is for news) is reproduced. In addition, Japanese Laid-open Patent Publication 2005-223931 discloses a remote control having a liquid crystal display to display a user interface corresponding to operations which the user can perform for a content selected by the user. However, none of the known technologies disclosed in the three patent publications, even when applied to the conventional content reproducing devices, do not solve the problem of the requirement of many operations described above.

### SUMMARY OF THE INVENTION

An object of the present invention is to provide a content reproducing device which can find and reproduce a content with fewer operations.

According to the present invention, this object is achieved by a content reproducing device comprising: content reproducing means for reproducing contents, the content reproducing means including a display unit; content reproduction control means for controlling reproduction of contents by the content reproducing means; operation means operated by a user to command operation of the content reproducing device; and list display control means for controlling operation of displaying a content list showing reproducible contents on the display unit, wherein the operation means has at least one direct button operated to display the content list of a predetermined type of contents, wherein when the at least one direct button is operated by the user, the list display control means displays the content list of the predetermined type of contents on the display unit, and wherein when the operation means is operated by the user to select an arbitrary content from the content list, the content reproduction control means controls the content reproducing means to reproduce the content selected by the user.

The content reproducing device of the present invention has the following advantage. When a direct button of the operation means for a predetermined content type is operated, a content list showing reproducible contents of the predetermined content type is displayed. When thereafter the operation means is operated by the user to select an arbitrary content from the content list, the selected content is reproduced. Thus, by one operation to operate the direct button, a content list of the predetermined content type including a target content is displayed so as to make it possible to find the target content from the content list. Then, the target content can be reproduced by performing a content selection operation to select the target content displayed in the content list, namely, by two operations of operating the direct button and performing the content selection operation. Thus, the content reproducing device can find and reproduce a target content with fewer operations, so that it is easier to use it.

Preferably, the content reproduction control means controls operations of reproducing photo contents of still images, music contents of music and video contents of moving images, wherein the at least one direct button includes a photo button operated to display a content list of the photo contents, a music button operated to display a content list of the music contents, and a video button operated to display a content list of the video contents, wherein when the photo button is operated by the user, the list display control means displays the content list of the photo contents on the display unit, wherein when the music button is operated by the user, the list display control means displays the content list of the music contents on the display unit, and wherein when the video button is operated by the user, the list display control means displays the content list of the video contents on the display unit. This makes it possible to display content lists showing reproducible contents of photo, music and video each by one operation to operate any of the direct buttons (photo, music and video buttons), so that it is easier to use it.

Further preferably, the content reproducing device further comprises communication means for communicating with a content supply unit for supplying contents, the content supply unit being connected for communication with the content reproducing device via the communication means to supply the contents of the content supply unit to the content reproducing device, wherein the list display control means displays, on the display unit, a content list of the contents supplied from the content supply unit. According to this preferred mode, a content list showing reproducible contents supplied from the content supply unit connected to the content reproducing device can be displayed by one operation to operate a direct button, so that it is easier to use it. In addition, in contrast to the prior art, this eliminates the need for an operation to select a content supply unit. Thus, this achieves an effect that a target content can be found and reproduced with fewer operations, so that it is easier to use it.

Still further preferably, the content reproducing device further comprises content storage means for storing contents, wherein the list display control means displays the content list of the contents stored in the content storage means. According to this preferred mode, a content list showing reproducible contents stored in the content reproducing device can be displayed by one operation to operate a direct button, so that it is easier to use it.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is schematic view showing an arrangement in which a content reproducing device according to an embodiment of the present invention is connected to content supply units;
FIG. 2 is a schematic block diagram of the content reproducing device;
FIG. 3 is a schematic plan view showing a structure of a remote control;
FIG. 4 is a schematic view showing a display example of a content list of video contents;
FIG. 5 is a flow chart showing the operation of the content reproducing device; and
FIG. 6 is a schematic block diagram of a content reproducing device according to a further embodiment of the present invention.

### DESCRIPTION OF THE PREFERRED EMBODIMENTS

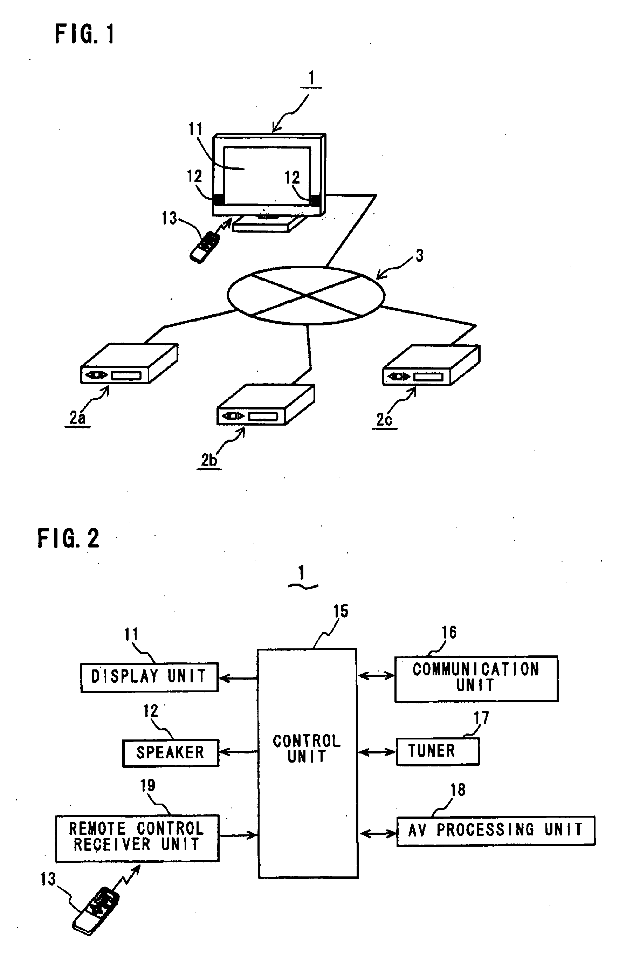

Embodiments of the present invention, as best mode for carrying out the invention, will be described hereinafter with reference to the drawings. The present invention relates to a content reproducing device. It is to be understood that the embodiments described herein are not intended as limiting, or encompassing the entire scope of, the present invention. Note that like parts are designated by like reference numerals, characters or symbols throughout the drawings. FIG. 1 is schematic view showing an arrangement in which a content reproducing device 1 according to an embodiment of the present invention is connected to content supply units 2a, 2b, 2c. The content reproducing device 1 is connected to, and can communicate with, the multiple content supply units 2a, 2b, 2c via a LAN (Local Area Network) 3.

The content reproducing device 1 reproduces contents such as images and music, and comprises a display unit 11 for displaying an image or screen, a speaker 12 for outputting audio, a remote control 13 which is an operation unit (claimed "operation means") to be operated by a user to command the operation of the content reproducing device, and so on. The display unit 11 serves as content reproducing means for reproducing contents of images or video, while the speaker 12 serves as content reproducing means for reproducing contents of music or audio. The content reproducing device 1 communicates with the content supply units 2a, 2b, 2c via the LAN 3, and is supplied with contents from the content supply units 2a, 2b, 2c via the LAN 3 so as to reproduce the contents. Further, the content reproducing device 1 receives a television broadcast signal from a broadcast station so as to reproduce contents of a television program based on the television broadcast signal. The content supply units 2a, 2b, 2c store contents such as images and music, and supply the stored contents to other devices. The content supply units 2a, 2b, 2c communicate with the content reproducing device 1 via the LAN 3, and supply the stored contents to the content reproducing device 1 via the LAN 3, respectively.

FIG. 2 is a schematic block diagram of the content reproducing device 1. Referring to FIG. 2, the content reproducing device 1 comprises, in addition to the units or elements described above, a control unit 15 (serving as claimed "content reproduction control means" and "list display control means") formed of e.g. a CPU (Central Processing Unit) for controlling the content reproducing device 1, a communication unit 16 (claimed "communication means"), a tuner 17, an AV (Audio/Video) processing unit 18, a remote control receiver unit 19, and so on. Under the control of the control unit 15, the communication unit 16 communicates with another or other devices or units such as the content supply units 2a, 2b, 2c via the LAN 3 so as to send and receive various signals such as control signals, image signals and audio signals to and from the content supply units 2a, 2b, 2c via the LAN 3. In other words, the content supply units 2a, 2b, 2c are connected for communication with the content reproducing device 1 via the communication unit 16.

Further, under the control of the control unit 15, the tuner 17 receives television broadcast signals, and processes the received television broadcast signals so as to generate image signals and audio signals. Under the control of the control unit 15, the AV processing unit 18 processes the image signals and the audio signals received by the communication unit 16, and also processes the image signals and the audio signals generated by the tuner 17, so as to allow the display unit 11 and the speaker 12 to reproduce contents such as images and music. Furthermore, under the control of the control unit 15, the AV processing unit 18 generates image signals to display various images on the display unit 11.

The remote control receiver unit 19 receives infrared coded signals sent from the remote control 13, and converts the received infrared coded signals each to an electrical signal. The display unit 11 displays images corresponding to the image signals supplied under the control of the control unit 15. The speaker 12 outputs audio corresponding to the audio signals supplied under the control of the control unit 15. The control unit 15 determines the contents of operations of the remote control 13 based on the infrared coded signals received by the remote control receiver unit 19, so as to control various operations of the content reproducing device 1 corresponding to the operations of the remote control 13 such as a list display operation to display, on the display unit 11, a content list showing reproducible contents, and a content reproducing operation for the display unit 11 and/or the speaker 12 to reproduce contents.

A content list is displayed on the display unit 11 under the control of the control unit 15 as follows. The control unit 15 communicates with the content supply units 2a, 2b, 2c so as to collect or receive, from the content supply units 2a, 2b, 2c, information (content information) about reproducible contents stored in the content supply units 2a, 2b, 2c. The control unit 15 supplies the thus collected content information to the AV processing unit 18, and controls the AV processing unit 18 to generate an image signal to display a content list, and thereafter supplies the image signal thus generated by the AV processing unit 18 to the display unit 11, whereby a content list is displayed on the display unit 11. This is how the control unit 15 controls to display a content list on the display unit 11.

The contents are reproduced under the control of the control unit 15 as follows. The control unit 15 communicates with the content supply units 2a, 2b, 2c so as to receive, from the content supply units 2a, 2b, 2c, supply of e.g. image signals and/or audio signals of contents (namely supply of contents) stored in the content supply units 2a, 2b, 2c. The control unit 15 supplies, to the AV processing unit 18, e.g. the thus received image signals and/or audio signals supplied from the content supply units 2a, 2b, 2c, and controls the AV processing unit 18 to process e.g. the image signals and/or audio signals. The control unit 15 controls to supply the image signals processed by the AV processing unit 18 to the display unit 11, and to supply the audio signals processed by the AV processing unit 18 to the speaker 12, whereby the contents supplied from the content supply units 2a, 2b, 2c are reproduced by the display unit 11 and the speaker 12. This is how the control unit 15 controls to reproduce the contents. Examples of the contents to be reproduced by, or under the control of, the control unit 15 in the content reproducing operation are photo contents of still images, music contents of music and video contents of moving images.

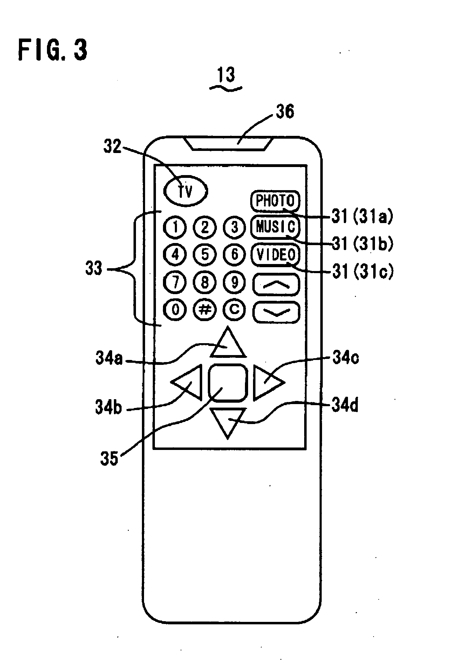

FIG. 3 is a schematic plan view showing a structure of the remote control 13. The remote control 13 comprises operation buttons which are operated by a user to command various operations of the content reproducing device 1, and which include direct buttons 31 (31a, 31b, 31c), a television (TV) button 32, number buttons 33, cursor buttons 34a to 34d, a decision button 35, and so on as well as a light emitting unit 36 to emit an infrared coded signal according to the operation of each of these operation buttons. The direct buttons 31 are those operated by the user to display on the display unit 11 a list of reproducible contents (content list) for respective predetermined types of contents. The direct buttons 31 are provided corresponding to the types of contents, and include a photo button 31 a, a music button 31b and a video button 31c. More specifically, the photo button 31 a is operated to display a content list of photo contents, and the music button 31b is operated to display a content list of music contents, while the video button 31 c is operated to display a content list of video contents.

The television button 32 is operated e.g. to start viewing a television program. The number buttons 33 are used to select numbers, and operated e.g. to select or decide an arbitrary content from the contents displayed in a content list, and to select a receiving channel of a television broadcast. The cursor buttons 34a to 34d are operated to select an arbitrary content from the content list, while the decision button 35 is operated e.g. to decide the selection by the cursor buttons 34a to 34d. In response to the operations of these operation buttons, the remote control 13 emits, from the light emitting unit 36, an infrared coded signal associated with, or corresponding to, each of the operations.

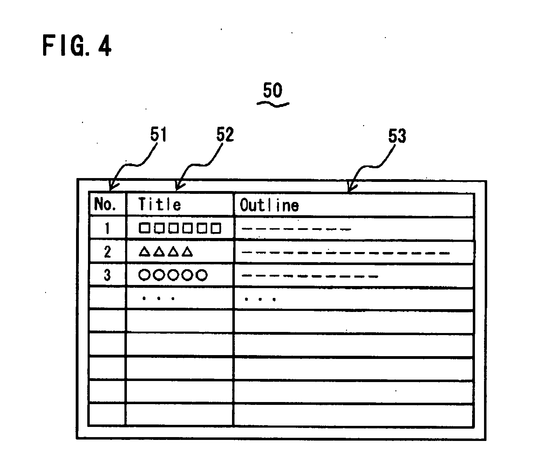

FIG. 4 is a schematic view showing a display example of a content list 50 of video contents. The content list 50 of the video contents lists serial numbers (Nos.), titles and outlines of reproducible video contents in the form of a table. The serial numbers are listed in a number (No.) column 51, and the titles are listed in a title column 52, while the outlines are listed in an outline column 53. Note that a content list of photo contents lists serial numbers, album names, photograph date and time, and the like of reproducible photo contents, while a content list of music contents lists serial numbers, artist names, album names, reproduction periods, and the like of reproducible music contents, although display examples of such content lists of the photo contents and the music contents are not shown in the drawings.

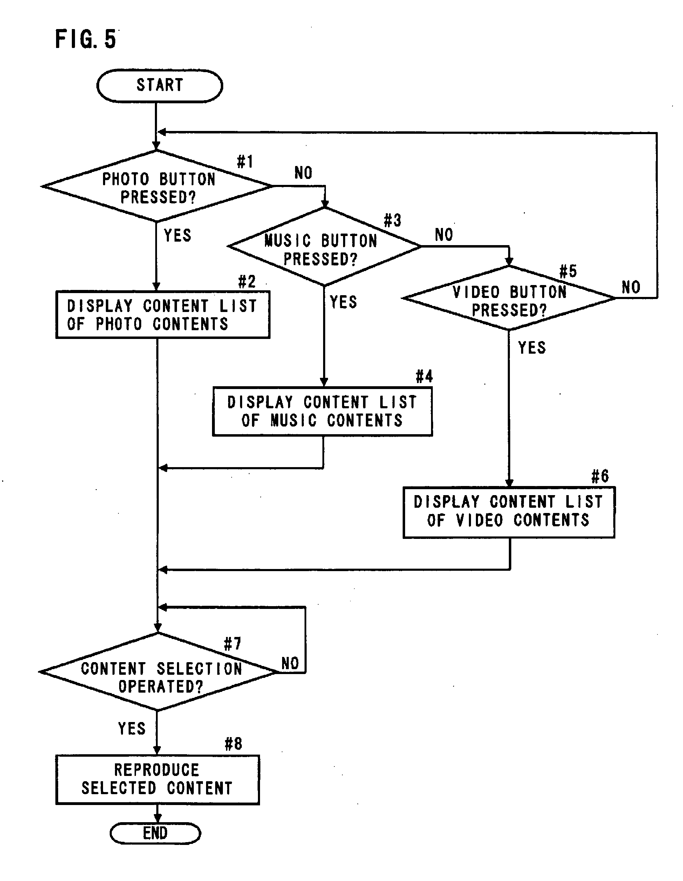

FIG. 5 is a flow chart showing the operation of the content reproducing device 1. Referring to FIG. 5, when the photo button 31a of the remote control 13 is pressed (YES in Step #1), the control unit 15 displays a content list of reproducible photo contents on the display unit 11 (Step #2). More specifically, the control unit 15 communicates with the content supply units 2a, 2b, 2c to collect or receive content information (album names, photograph data and time, and so on) of reproducible photo contents stored in the content supply units 2a, 2b, 2c, and displays on the display unit 11 a content list based on the thus collected content information (namely a content list of reproducible photo contents).

When the music button 31b of the remote control 13 is pressed (YES in Step #3), the control unit 15 displays a content list of reproducible music contents on the display unit 11 (Step #4). More specifically, the control unit 15 communicates with the content supply units 2a, 2b, 2c to collect or receive content information (artist names, album names, reproduction periods, and so on) of reproducible music contents stored in the content supply units 2a, 2b, 2c, and displays on the display unit 11 a content list based on the thus collected content information (namely a content list of reproducible music contents). On the other hand, when the video button 31c of the remote control 13 is pressed (YES in Step #5), the control unit 15 displays a content list of reproducible video contents on the display unit 11 (Step #6). More specifically, the control unit 15 communicates with the content supply units 2a, 2b, 2c to collect or receive content information (titles, outlines, etc.) of reproducible video contents stored in the content supply units 2a, 2b, 2c, and displays on the display unit 11 a content list based on the thus collected content information (namely a content list of reproducible video contents).

Referring further to FIG. 5, when a content selection is operated with a remote control 13 to select an arbitrary content from the content list (YES in Step #7), the control unit 15 controls to reproduce the selected content by the display 11 and the speaker 12 (Step #8). More specifically, the control unit 15 communicates with the content supply units 2a, 2b, 2c to receive supply of a content selected by the content selection operation, and controls to reproduce the supplied content (namely the content selected by the content selection operation) by the display 11 and the speaker 12. The content selection operation is performed either by pressing the cursor buttons 34a to 34d of the remote control 13 to operate a cursor displayed on the content list for selecting a title of a content and at the same pressing the decision button 35, or by pressing the number buttons 33 of the remote control 13 to enter a serial number of a content.

The content reproducing device 1 having the structure described above has the following advantages. If a target content to be reproduced is a photo content, a content list of photo contents including a target photo content is displayed by one operation of pressing the photo button 31 a so as to make it possible to find the target photo content from the content list. Then, the target photo content can be reproduced by performing a content selection operation to select the target photo content displayed in the content list, namely, by two operations of pressing the photo button 31a and performing the content selection operation. Further, if a target content to be reproduced is a music content, a content list of music contents including a target music content is displayed by one operation of pressing the music button 31b so as to make it possible to find the target music content from the content list. Then, the target music content can be reproduced by performing a content selection operation to select the target music content displayed in the content list, namely, by two operations of pressing the music button 31 b and performing the content selection operation.

On the other hand, if a target content to be reproduced is a video content, a content list of video contents including a target video content is displayed by one operation of pressing the video button 31c so as to make it possible to find the target video content from the content list. Then, the target video content can be reproduced by performing a content selection operation to select the target video content displayed in the content list, namely, by two operations of pressing the video button 31 c and performing the content selection operation. Thus, the content reproducing device 1 having such structure can find and reproduce a target content from photo, music and video contents with fewer operations, so that it is easier to use it.

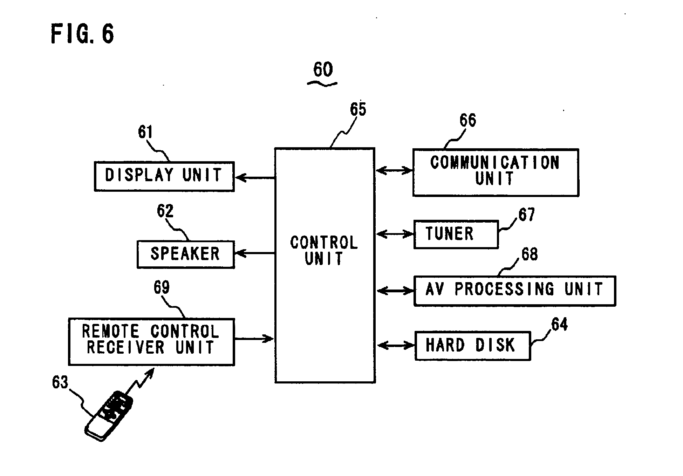

FIG. 6 is a schematic block diagram of a content reproducing device 60 according to a further embodiment of the present invention. The content reproducing device 60 of the present embodiment is the same as the content reproducing device 1 of the embodiment described above, except that the content reproducing device 60 further comprises a hard disk 70 (claimed "content storage means") for storing contents, in which the content reproducing device 60 is structured so as to be usable or operable with the content supply units 2a, 2b, 2c either connected thereto (activated) or disconnected therefrom (inactivated). When the content reproducing device 60 is used with the content supply units 2a, 2b, 2c connected thereto, the content reproducing device 60 collects content information about both the contents stored in the hard disk 70 and the contents stored in the content supply units 2a, 2b, 2c so as to display a content list of both the contents stored in the hard disk 70 and the contents stored in the content supply units 2a, 2b, 2c. Alternatively, when the content reproducing device 60 is used with the content supply units 2a, 2b, 2c disconnected therefrom, the content reproducing device 60 collects content information about the contents stored in the hard disk 70 so as to display a content list of the contents stored in the hard disk 70.

It is to be noted that the present invention is not limited to the above-described embodiments, and various modifications are possible. For example, the direct buttons provided on the remote control can be only one or two of the photo button, the music button and the video button.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the spirit and scope of the present invention.

This application is based on Japanese patent application 2007-156100 filed June 13, 2007, the content of which is hereby incorporated by reference.

## Claims

1. A content reproducing device comprising:
content reproducing means for reproducing contents, the content reproducing means including a display unit;
content reproduction control means for controlling reproduction of contents by the content reproducing means;
operation means operated by a user to command operation of the content reproducing device; and
list display control means for controlling operation of displaying a content list showing reproducible contents on the display unit,
wherein the operation means has at least one direct button operated to display the content list of a predetermined type of contents,
wherein when the at least one direct button is operated by the user, the list display control means displays the content list of the predetermined type of contents on the display unit, and
wherein when the operation means is operated by the user to select an arbitrary content from the content list, the content reproduction control means controls the content reproducing means to reproduce the content selected by the user.

2. The content reproducing device according to claim 1,
wherein the content reproduction control means controls operations of reproducing photo contents of still images, music contents of music and video contents of moving images,
wherein the at least one direct button includes a photo button operated to display a content list of the photo contents, a music button operated to display a content list of the music contents, and a video button operated to display a content list of the video contents,
wherein when the photo button is operated by the user, the list display control means displays the content list of the photo contents on the display unit,
wherein when the music button is operated by the user, the list display control means displays the content list of the music contents on the display unit, and
wherein when the video button is operated by the user, the list display control means displays the content list of the video contents on the display unit.

3. The content reproducing device according to claim 2,
which further comprises communication means for communicating with a content supply unit for supplying contents, the content supply unit being connected for communication with the content reproducing device via the communication means to supply the contents of the content supply unit to the content reproducing device,
wherein the list display control means displays, on the display unit, a content list of the contents supplied from the content supply unit.

4. The content reproducing device according to claim 3,
which further comprises content storage means for storing contents,
wherein the list display control means displays the content list of the contents stored in the content storage means.
